**Europäisches Patentamt**

**European Patent Office**

**Office européen des brevets**

(19)

(11) Veröffentlichungsnummer : **0 165 323 B1**

(12) **EUROPÄISCHE PATENTSCHRIFT**

(45) Veröffentlichungstag der Patentschrift :
**17.08.88**

(51) Int. Cl.⁴ : **G 02 F   1/11**, G 02 B 26/02, **G 05 D  25/02**

(21) Anmeldenummer : **84106943.8**

(22) Anmeldetag : **18.06.84**

(54) Verfahren und Einrichtung zur akustischen Kontrolle von Justiervorgängen an optischen Vorrichtungen.

(43) Veröffentlichungstag der Anmeldung :
**27.12.85 Patentblatt 85/52**

(45) Bekanntmachung des Hinweises auf die Patenterteilung : **17.08.88 Patentblatt 88/33**

(84) Benannte Vertragsstaaten :
**AT BE CH DE FR GB IT LI NL SE**

(56) Entgegenhaltungen :
**DE-A- 2 850 743**
**DE-A- 3 151 834**
**US-A- 4 081 216**
**US-A- 4 126 834**
**APPLIED OPTICS, Band 18, Nr. 17, 1 September 1979;H.P. LAYER "Acoustooptic modulator intensity servo", Seiten 2947-2949**

(73) Patentinhaber : **DR.-ING. RUDOLF HELL GmbH**
**Grenzstrasse 1-5**
**D-2300 Kiel 14 (DE)**

(72) Erfinder : **Schulz-Hennig, Jörg**
**Gartenweg 7**
**D-2305 Heikendorf (DE)**
Erfinder : **Sievers, Horst**
**Buschstrasse 2**
**D-2308 Preetz (DE)**

## Beschreibung

Die vorliegende Erfindung bezieht sich auf die Gebiete der abbildenden Optik und der Laser-Optik und betrifft optische Vorrichtungen, bei denen die Intensitätsverteilung in einem aus Teilstrahlen bestehenden Lichtbündel, insbesondere in einem Laser-Lichtbündel, bezüglich einer Ausdehnung einer im Strahlengang befindlichen Bezugsebene quer zur optischen Achse des Lichtbündels justiert werden muß.

Die Intensitätsverteilung, die Lage oder die Richtung eines Lichtbündels wird durch optische Komponenten, wie Spiegel, Umlenkprismen, Linsen, optisch transparente Plan- und Keilplatten, Strichgitter, holografische Ablenkblenden, akustische Multifrequenz-Modulatoren oder akustooptische Reflektoren beeinflußt. Schließlich kann auch die Lichtquelle selbst bewegt werden. Die Justierung eines Lichtbündels bezüglich seiner Intensitätsverteilung, seiner Lage oder seiner Richtung erfolgt durch geeignete Justiermittel in Form von mechanischen Verstellungen, wie Spiegelhalterungen oder in Form von elektromechanischen Verstellungen wie Piezoantrieben.

Zur Kontrolle der Justierung eines Lichtbündels ist es bekannt, während des Justiervorganges Lehren, wie Zielscheiben, Schirme oder Lochblenden, zu beobachten oder die Signale von geeigneten Fotodetektoren z. B. auf einem Oszillographen sichtbar zu machen.

Die bekannten Justierhilfen sind in vielen Fällen aber nicht genau genug, liefern machmal keine eindeutige Aussage über eine optimale Justierung und sind gelegentlich auch schwer zu handhaben. Hinzu kommt, daß es beispielsweise aufgrund der exponierten Lage eines Justiermittels oder der kompakten Bauweise einer optischen Vorrichtung oftmals nicht möglich ist, beim Justiervorgang gleichzeitig eine genaue Beobachtung oder Kontrolle der erfolgten Justierung vorzunehmen.

Der vorliegenden Erfindung liegt daher die Aufgabe zugrunde, ein Verfahren und eine Einrichtung zur akustischen Kontrolle der Intensitätsverteilung in einem aus Teilstrahlen bestehenden Lichtbündel bezüglich einer Ausdehnung einer im Strahlengang befindlichen Bezugsebene quer zur optischen Achse des Lichtbündels anzugeben, mit deren Hilfe die Justierung leichter und genauer durchzuführen ist und mit denen außerdem die erforderlichen Schritte für eine optimale Justierung nach Größe und Richtung signalisiert werden.

Diese Aufgabe wird bezüglich des Verfahrens durch die Merkmale des Anspruchs 1 und bezüglich der Einrichtung durch die Merkmale des Anspruchs 10 gelöst. Vorteilhafte Weiterbildungen sind in den abhängigen Ansprüchen angegeben.

Die Erfindung wird im folgenden anhand einer Figur näher erläutert. Sie zeigt ein Ausführungsbeispiel einer akustischen Kontroll-Einrichtung zur Justierung eines Lichtbündels bezüglich seiner Intensitätsverteilung in einer Ausdehnung einer vorgegebenen Bezugsebene quer zur optischen Achse des Lichtbündels. Die Intensitätsverteilung im Lichtbündel kann beispielsweise durch die Einstellung des Bragg-Winkels eines akustooptischen Modulators (AOM) gegeben sein.

Im dargestellten Ausführungsbeispiel wird z. B. ein Laserstrahl 51 in einem akustooptischen Vielkanal-Modulator 52 in n divergierende Teilstrahlen 53 eines Lichtbündels 54 aufgespalten, die mittels einer Sammellinse 55 parallelisiert werden.

Der akustooptische Vielkanal-Modulator 52 besteht im wesentlichen aus einem Kristallblock, in den mittels eines piezoelektrischen Schwingers für jeden Kanal eine Ultraschallwelle unterschiedlicher Frequenz eingekoppelt wird. Durch jede der sich im Kristallblock ausbreitende Ultraschallwelle wird ein Teil des einfallenden Lichtstrahls 51 in eine andere Richtung gebeugt, der als Teilstrahl 53 eines Kanals aus dem Kristallblock austritt. Eine optimale Beugung wird dann erreicht, wenn der einfallende Lichtstrahl 51 unter einem definierten Winkel, der als Bragg-Winkel bezeichnet wird, in den Kristallblock eintritt. Die zur Ansteuerung des piezoelektrischen Schwingers benötigten Hochfrequenzsignale unterschiedlicher Frequenz für die einzelnen Kanäle werden in einem HF-Oszillator 56 erzeugt. Durch Abschalten des Hochfrequenzsignals eines Kanals durch ein entsprechendes Steuersignal $S_n$ an den HF-Oszillator 56 kann der entsprechende Teilstrahl 53 des Kanals ausgeschaltet werden.

Eine ausführlichere Beschreibung solcher akustooptischen Modulatoren findet man beispielsweise in « Optoelectronics — An Introduction », J. Wilson and J.F.B. Hawkes, Verlag Prentice Hall International Inc., New Jersey, 1983.

Die Intensitätsverteilung innerhalb des Lichtbündels 54 wird durch die Verteilung der Frequenzen und der Amplituden der Hochfrequenzspannungen für die einzelnen Kanäle beeinflußt. Darüber hinaus wird die Intensitätsverteilung des Lichtbündels 54 durch Änderung des Bragg-Winkels des Modulators 52 um eine Achse, die senkrecht zum Lichtstrahl 51 und senkrecht zur Ausbreitungsrichtung der Ultraschallwellen verläuft, justiert (Bragg-Winkel-Einstellung).

Das Lichtbündel 54 soll z. B. eine symmetrische Intensitätsverteilung $I = f(x)$ in einer Ausdehnung (x) einer quer zur optischen Achse 57 des Lichtbündels 54 liegenden Bezugsebene 58 aufweisen. Zur Bestimmung der Intensitätsverteilung während des Justiervorganges werden die Intensitätswerte I einiger Kanäle bzw. Teilstrahlen 53, unter denen die Randstrahlen 63 des Lichtbündels 54 sein sollten, gemessen. Im allgemeinen ist es ausreichend, wie im Ausführungsbeispiel, lediglich die Intensitätswerte $I_l$ und $I_n$ der Randstrahlen 63 des ersten und n-ten Kanals des Modulators 52 zu messen. Dazu erzeugt ein Taktgeber 59 eine Taktfolge $T_0$, die über einen Takt-Eingang 60 in einen zyklischen Zähler 61 eingezählt wird. Der Zähler 61 erzeugt dabei an seinem Daten-Ausgang 62 ein digitales Steuersignal $S_n$, welches abwechselnd die Randstrahlen des ersten und n-ten Kanals des akustooptischen Modulators 52 einschaltet, während die anderen Teilstrahlen ausgeschaltet bleiben. Die Randstrahlen 63 werden mit einem im Strahlengang des Lichtbündels 54 befindlichen teildurchlässigen Planspiegel 64 ausgespiegelt und mit einer Sammellinse 65 auf die Meßfläche 66 eines optoelektronischen Wandlers 67 fokussiert, der während des Justiervorganges z. B. durch Änderung der Bragg-Winkel-Einstellung am Modulator 52 laufend nacheinander die Intensitätswerte $I_i$ und $I_n$ der beiden Randstrahlen 63 mißt. Die gemessenen Intensitätswerte $I_i$ und $I_n$ werden in einem Verstärker 68 verstärkt und in einem nachgeschalteten A/D-Wandler 69 digitalisiert. Die Meßanordnung kann selbstverständlich auch im Strahlengang des Lichtbündels 54 angeordnet sein.

Die laufend nacheinander gemessenen Intensitätswerte $I_i$ und $I_n$ der beiden Randstrahlen 63 werden mit Hilfe eines elektronischen Umschalters 70 derart in einem Register 71 zwischengespeichert, daß in einem Teilbereich des Registers jeweils die Intensitätswerte $I_i$ des einen Randstrahls und in dem anderen Teilbereich des Registers 71 jeweils die Intensitätswerte $I_n$ des anderen Randstrahls abgelegt werden. Dazu ist der Steuer-Eingang 72 des elektronischen Umschalters 70 mit der Taktfolge $T_0$ beaufschlagt, so daß der elektronische Umschalter 70 synchron mit dem Ein- und Ausschalten der beiden Randstrahlen 63 umgeschaltet wird.

Falls abweichend vom Ausführungsbeispiel nicht nur die Intensitätswerte I der Randstrahlen zur Bestimmung der Intensitätsverteilung herangezogen werden, wird jeweils die Intensitätsdifferenz zwischen zwei benachbarten Teilstrahlen und die Summe der einzelnen Intensitätsdifferenzen gebildet, welche der Intensitätsdifferenz der Randstrahlen entspricht. Da im Ausführungsbeispiel lediglich die Intensitätswerte $I_i$ und $I_n$ der Randstrahlen gemessen werden, werden in einer Differenzstufe 73 nur die Intensitäts-Differenzwerte $\Delta I = I_n - I_i$ gebildet, wozu die Intensitätswerte $I_i$ und $I_n$ aus dem Register 71 ausgelesen werden.

Da in den meisten Fällen wiederum nicht die absolute, sondern die relative Intensitätsverteilung von Interesse ist, werden die Intensitäts-Differenzwerte $\Delta I$ in einer Normierungs-Stufe 74 normiert. Dazu wird zunächst in einer Addier-Stufe 75 der Normierungs-Stufe 74 der Summenwert $\Sigma I = I_i + I_n$ und in einer Dividier-Stufe 76 die normierten Intensitäts-Differenzwerte $\Delta \bar{I}$ als Quotienten aus den Intensitäts-Differenzwerten $\Delta I$ und dem Summenwert $\Sigma I$ gebildet. Die normierten Intensitäts-Differenzwerte $\Delta \bar{I}$ charakterisieren durch Vorzeichen und Betrag die Richtung und Stärke der Asymmetrie in der Intensitätsverteilung des Lichtbündels 54 und damit auch Vorzeichen und Richtung des Bragg-Winkel-Fehlers des akustooptischen Modulators 52.

In einem Vergleicher 77 werden durch Vergleich der normierten Intensitäts-Differenzwerte $\Delta \bar{I}$ auf größer oder kleiner Null die Vorzeichen der normierten Intensitäts-Differenzwerte $\Delta I$ ermittelt und ein dem jeweils ermittelten Vorzeichen entsprechendes Steuersignal $S_2$ erzeugt.

Die normierten Intensitäts-Differenzwerte $\Delta \bar{I}$ werden nach einer vorgegebenen Funktion modifiziert, im Ausführungsbeispiel in einer Quadrier-Stufe 78 quadriert und aus den quadrierten normierten Intensitäts-Differenzwerten $(\Delta \bar{I})^2$ in einer nachfolgenden Dividier-Stufe 79 die Kehrwerte $1/(\Delta \bar{I})^2$ gebildet.

Die Kehrwerte $1/(\Delta \bar{I})^2$ werden im dargestellten Ausführungsbeispiel in einem D/A-Wandler 80 in ein analoges Steuersignal $S_3$ für einen spannungsgesteuerten Oszillator 81 (VCO) umgewandelt. Der spannungsgesteuerte Oszillator 81 erzeugt ein periodisches Steuersignal $S_4$, dessen Frequenz den Kehrwerten $1/(\Delta \bar{I})^2$ proportional ist.

Die in der Quadrier-Stufe 78 gewonnenen normierten und quadrierten Intensitäts-Differenzwerte $(\Delta \bar{I})^2$ werden über einen Schalter 82 auf einen Vergleicher 83 einer Schwellen-Schaltung 84 gegeben und dort mit einem in einem Register 85 abgelegten normierten Grenzwert $\bar{I}_g$ verglichen. Der Grenzwert $\bar{I}_g$ charakterisiert eine zulässige Abweichung von der exakten Justierung auf $(\Delta \bar{I})^2 = 0$. Unterschreiten die normierten quadratischen Intensitäts-Differenzwerte $(\Delta \bar{I})^2$ diesen Grenzwert $\bar{I}_g$, erzeugt der Vergleicher 83 ein weiteres Steuersignal $S_5$.

Ein erster Oszillator 86, der eine Schwingung hoher Frequenz von z. B. 2000 Hz erzeugt, und ein zweiter Oszillator 87, der eine Schwingung tiefer Frequenz von z. B. 150 Hz abgibt, sind über einen von dem Steuersignal $S_2$ gesteuerten elektronischen Umschalter 88, einen von dem Steuersignal $S_4$ getakteten unterbrecher 89, einen von dem Steuersignal $S_5$ gesteuerten weiteren elektronischen Umschalter 90 und einen Verstärker 91 mit einem elektroakustischen Wandler z. B. mit einem Lautsprecher 92 zur Erzeugung von Meßtönen verbunden. Die beiden Oszillatoren 86 und 87 lassen sich in Abhängigkeit der Stellung des elektronischen Umschalters 90 außerdem über einen getakteten Umschalter 93, der von einem in einem Taktgeber 94 erzeugten Steuersignal $S_6$ niedriger Frequenz von z. B. 4 Hz getaktet wird, und den Umschalter 90 an den Lautsprecher 92 anschließen.

Beim Justiervorgang wird somit in Abhängigkeit des Vorzeichens der festgestellten Intensitäts-Differenzwerte $(\Delta \bar{I})$, d. h. in Abhängigkeit der Fehlerrichtung, entweder der Oszillator 86 oder der Oszillator 87 mittels des Umschalters 88 auf den Lautsprecher 92 geschaltet und ein entsprechend hoher oder tiefer Meßton erzeugt. Diese Meßtöne werden mittels des Unterbrechers 89 in Abhängigkeit der Beträge der quadratischen Intensitäts-Differenzwerte $(\Delta \bar{I})^2$ derart unterbrochen, daß die Unterbrecherfrequenz quadratisch mit kleiner werdenden Intensitäts-Differenzwerten ansteigt. Unterschreiten die quadratischen Intensitäts-Differenzwerte $(\Delta I)^2$ den vorgegebenen Grenzwert $I_g$, schaltet der elektronische Umschalter 90 in die gestrichelt dargestellte Position um, wodurch, gesteuert von dem getakteten Unterbrecher 93, abwechselnd der tiefe und der hohe Meßton hörbar werden.

Falls eine genauere Justierung auf den Intensitäts-Differenzwerten $\Delta I = 0$ erforderlich wird, läßt sich wiederum die Schwellen-Schaltung 84 durch Betätigen des Schalters 82 außer Betrieb setzen, so daß der Umschalter 90 in der dargestellten Position verbleibt. In diesem Falle steigt die Unterbrecherfrequenz des Unterbrechers 89 bei Annäherung an den Intensitäts-Differenzwert Null so stark an, daß nahezu ein Dauer-Meßton erzeugt wird. Dabei ist dafür gesorgt, daß der Vergleicher 77 im Zustand $\Delta \bar{I} = 0$, in dem er kein Vorzeichen erkennt, ein definiertes Steuersignal $S_2$ abgibt, wodurch auch der Umschalter 88 in einer definierten Lage verbleibt.

Die Art der Meßton-Erzeugung ist nicht auf das beschriebene Ausführungsbeispiel beschränkt. Es liegt im Rahmen der Erfindung, die Intensitäts-Differenzwerte nach Betrag und Richtung auf jede andere Art hörbar zu machen. Beispielsweise kann auch die Amplitude, das Tastverhältnis oder die Tastfrequenz einer Schwingung in Abhängigkeit der festgestellten Intensitäts-Differenzwerte modifiziert werden, wodurch dementsprechend die Lautstärke, die Unterbrechungsdauer oder die Unterbrechungsfrequenz des Meßtons geändert wird.

Sollte statt der relativen doch die absolute Intensitätsverteilung von Interesse sein, wird die Normierungs-Stufe 74 überbrückt oder entfällt ganz. Dann wird auch in das Register 85 der Schwellen-Schaltung 84 ein absoluter Grenzwert geladen.

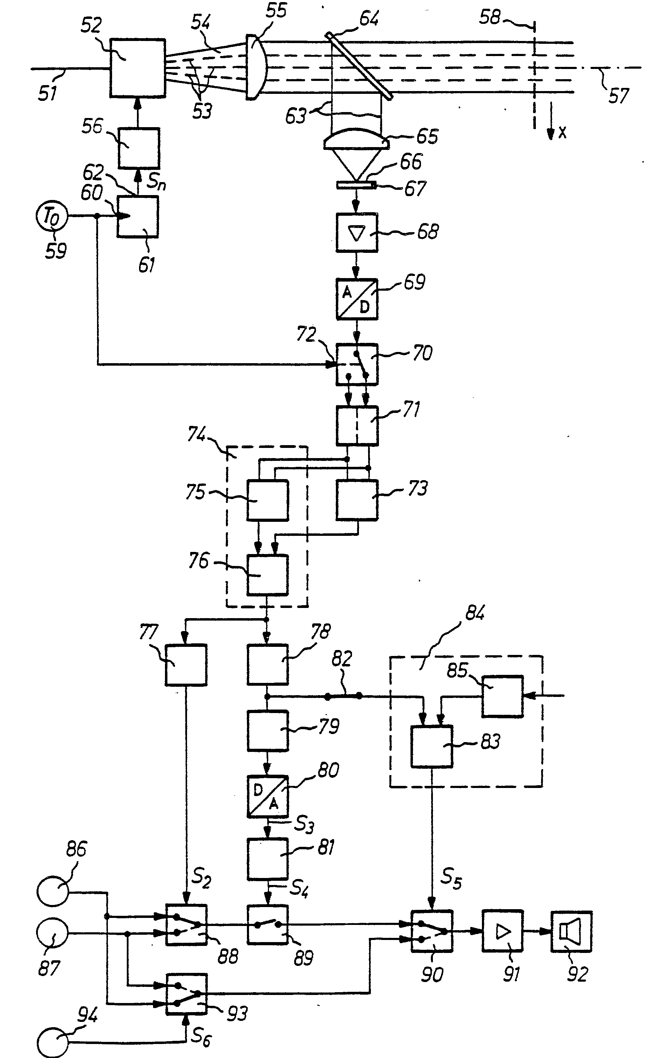

## Patentansprüche

1. Verfahren zur akustischen Kontrolle der Justierung eines aus Teilstrahlen bestehenden Lichtbündels bezüglich seiner Intensitätsverteilung in einer Ausdehnung einer im Strahlengang befindlichen Bezugsebene quer zur optischen Achse des Lichtbündels, dadurch gekennzeichnet, daß

    a) den in der Ausdehnung (X) der Bezugsfläche (58) liegenden Teilstrahlen (53) des Lichtbündels (54) mindestens die Intensitätswerte (I) der Randstrahlen gemessen werden,

    b) von jeweils zwei in Richtung der Ausdehnung (x) der Bezugsfläche (58) benachbarten Teilstrahlen (53) die Intensitäts-Differenzwerte ($\Delta I$) nach Betrag und Vorzeichen bestimmt und aufaddiert werden, und

    c) eine Schwingung erzeugt wird, wobei der Parameter der Schwingung in Abhängigkeit des Betrages und des Vorzeichens der jeweiligen aufaddierten Intensitäts-Differenzwerte ($\Delta I$) modifiziert und die derart modifizierte Schwingung als nach Betrag und Vorzeichen unterscheidbarer Meßton hörbar gemacht wird.

2. Verfahren nach Anspruch 1, dadurch gekennzeichnet, daß als Parameter der Schwingung die Frequenz, die Amplitude, die Tastfrequenz oder das Tastverhältnis in Abhängigkeit von Betrag und Vorzeichen der Intensitäts-Differenzwerte ($\Delta I$) modifiziert und dadurch die Tonhöhe, die Lautstärke, die Unterbrechungsfrequenz oder die Unterbrechungsdauer des Meßtones geändert werden.

3. Verfahren nach Anspruch 1 oder 2, dadurch gekennzeichnet, daß

    a) das Vorzeichen des jeweiligen Intensitäts-Differenzwertes ($\Delta I$) festgestellt wird, und

    b) die Frequenz der Schwingung bzw. die Tonhöhe des Meßtons in Abhängigkeit vom festgestellten Vorzeichen geändert wird.

4. Verfahren nach einem der Ansprüche 1-3, dadurch gekennzeichnet, daß die Tastfrequenz der Schwingung bzw. die Unterbrechungsfrequenz des Meßtones in Abhängigkeit der jeweiligen Beträge der Intensitäts-Differenzwerte ($\Delta I$) geändert wird.

5. Verfahren nach einem der Ansprüche 1-4, dadurch gekennzeichnet, daß die festgestellten Intensitäts-Differenzwerte ($\Delta I$) nach einer vorgegebenen Funktion modifiziert und ein Parameter der Schwingung in Abhängigkeit der modifizierten Intensitäts-Differenzwerte ($\Delta I^2$) geändert wird.

6. Verfahren nach einem der Ansprüche 5, dadurch gekennzeichnet, daß die festgestellten Intensitäts-Differenzwerte ($\Delta I$) modifiziert, die Kehrwerte der modifizierten Differenzwerte gebildet und ein Parameter der Schwingung in Abhängigkeit des Kehrwertes der modifizierten Intensitäts-Differenzwerte ($1/\Delta I^2$) geändert wird.

7. Verfahren nach einem der Ansprüche 1-6, dadurch gekennzeichnet, daß

    a) die festgestellten Intensitäts-Differenzwerte ($\Delta I$) oder die modifizierten Intensitäts-Differenzwerte ($\Delta I^2$) mit einem vorgegebenen Grenzwert ($I_g$) verglichen werden, welcher eine erlaubte Intensitätsabweichung repräsentiert, und

    b) das Unterschreiten des vorgegebenen Grenzwertes ($I_g$) durch die Intensitäts-Differenzwerte ($\Delta I$) oder die modifizierten Intensitäts-Differenzwerte ($\Delta I$)$^2$ als Meßton hörbar gemacht wird.

8. Verfahren nach Anspruch 7, dadurch gekennzeichnet, daß bei Unterschreiten des Grenzwertes ($I_g$) der von Vorzeichen und Betrag der Intensitäts-Differenzwerte ($\Delta I$) abhängige Meßton abgeschaltet wird.

9. Verfahren nach einem der Ansprüche 1-8, dadurch gekennzeichnet, daß die gemessenen Intensitäts-Differenzwerte ($\Delta I$) und der vorgegebene Grenzwert ($I_g$) normiert werden ($\Delta \bar{I}$, $\bar{I}g$).

10. Einrichtung zur akustischen Kontrolle der Justierung eines aus Teilstrahlen bestehenden Lichtbündels bezüglich seiner Intensitätsverteilung in einer Ausdehnung einer im Strahlengang befindlichen Bezugsebene quer zur optischen Achse des Lichtbündels, gekennzeichnet durch

    a) eine optoelektronische Meßanordnung (67, 68) zur Messung der Intensitätswerte (I) von Teilstrahlen des Lichtbündels,

    b) eine an die optoelektronische Meßanordnung (67, 68) angeschlossene Differenz-Stufe (73) zur Ermittlung von Intensitäts-Differenzwerten ($\Delta I$) aus den Intensitätswerten (I) der Teilstrahlen,

    c) eine mit der Differenz-Stufe (73) verbundene Stufe (77) zur Bestimmung der Vorzeichen der Intensitäts-Differenzwerte (ΔI),

d) einen an die Stufe (77) und die Differenz-Stufe (73) angeschlossenen Schwingungs-Generator (81, 86, 87, 88) zur Erzeugung einer Schwingung und zur Modifizierung der Schwingung in Abhängigkeit des Betrages und des Vorzeichens des jeweiligen Intensitäts-Differenzwertes (ΔI), und

e) einen an den Schwingungs-Generator (81, 86, 87, 88, 89) angeschlossenen elektroakustischen Wandler (92) zum Hörbarmachen der modifizierten Schwingung als Meßton.

11. Einrichtung nach Anspruch 10, dadurch gekennzeichnet, daß der Schwingungs-Generator (81, 86, 87, 88, 89) von der Stufe (77) gesteuerte Mittel (86, 87, 88) zur Änderung der Schwingung in Abhängigkeit des Vorzeichens des jeweiligen Intensitäts-Differenzwertes (ΔI) aufweist.

12. Einrichtung nach Anspruch 10 oder 11, dadurch gekennzeichnet, daß der Schwingungs-Generator (81, 86, 87, 88, 89) mit der Differenz-Stufe (73) verbundene Mittel (81, 89) zur Änderung der Schwingung in Abhängigkeit des Betrages des jeweiligen Intensitäts-Differenzwertes (ΔI) aufweist.

13. Einrichtung nach einem der Ansprüche 10-12, dadurch gekennzeichnet, daß

a) eine an die Differenz-Stufe (73) angeschlossene Schwellen-Schaltung (84) vorgesehen ist, zur Gewinnung eines Steuersignals bei Unterschreiten eines vorgegebenen Grenzwertes ($I_g$) durch die Intensitäts-Differenzwerte (ΔI), und

b) der Schwingungs-Generator (81, 86, 87, 88, 89) vom Steuersignal gesteuerte zusätzliche Mittel (90, 93, 94) zur Erzeugung einer zweiten Schwingung bei Unterschreiten des Grenzwertes ($I_g$) und zum Durchschalten der zweiten Schwingung an den elektroakustischen Wandler (92) aufweist.

14. Einrichtung nach einem der Ansprüche 10-13, dadurch gekennzeichnet, daß eine mit der Differenz-Stufe (73) verbundene Normierungs-Stufe (74) vorgesehen ist zur Normierung der festgestellten Intensitäts-Differenzwerte (ΔI).

15. Einrichtung nach Anspruch 14, dadurch gekennzeichnet, daß der Normierungs-Stufe (74) eine Stufe (78) zur Modifizierung der Intensitäts-Differenzwerte (ΔI) nach einer vorgebbaren Funktion nachgeschaltet ist.

16. Einrichtung nach Anspruch 15, dadurch gekennzeichnet, daß der Stufe (78) eine Kehrwert-Stufe (79) zur Bildung der Kehrwerte der modifizierten Intensitäts-Differenzwerte ($1/ΔI^2$) nachgeschaltet ist.

## Claims

1. Method for the acoustic control of the adjustment of a light bundle consisting of partial rays, relative to its intensity distribution in an extension of a reference plane, situated in the path of rays, transversely to the optical axis of the light bundle, characterized in that

a) of the partial rays (53) of the light bundle (54) lying in the extension (x) of the reference area (58), at least the intensity values (I) of the marginal rays are measured,

b) of respectively two adjacent partial rays (53) in the direction of the extension (x) of the reference area (58), the intensity differential values (ΔI) are determined according to sum and sign and are added, and

c) an oscillation is produced, in which the parameter of the oscillation is modified in dependence upon the sum and the sign of the respective added intensity differential values (ΔI) and the oscillation which is modified in such a way is made audible as a measurement sound which is able to be differentiated according to sum and sign.

2. Method according to claim 1, characterized in that as parameters of the oscillation, the frequency, the amplitude, the keying frequency or the keying ratio are modified in dependence upon sum and sign of the intensity differential values (ΔI) and thereby the pitch, the volume of sound, the interruption frequency or the interruption duration of the measurement sound are altered.

3. Method according to claim 1 or 2, characterized in that

a) the sign of the respective intensity differential value (ΔI) is established, and

b) the frequency of the oscillation or respectively the pitch of the measurement sound is altered in dependence upon the established sign.

4. Method according to one of claims 1-3, characterized in that the keying frequency of the oscillation or respectively the interruption frequency of the measurement sound is altered in dependence upon the respective sums of the intensity differential values (ΔI).

5. Method according to one of claims 1-4, characterized in that the established intensity differential values (ΔI) are modified according to a given function and a parameter of the oscillation is altered in dependence upon the modified intensity differential values ($ΔI^2$).

6. Method according to one of claims 5, characterized in that the established intensity differential values (ΔI) are modified, the reciprocal values of the modified differential values are formed and a parameter of the oscillation is altered in dependence upon the reciprocal value of the modified intensity differential values ($1/ΔI^2$).

7. Method according to one of claims 1-6, characterized in that

a) the established intensity differential values (ΔI) or the modified intensity differential values ($ΔI^2$) are compared with a given threshold value (Ig), which represents a permitted intensity deviation, and

b) the falling below the given threshold value (Ig) by the intensity differential values (ΔI) or the modified intensity differential values ($ΔI^2$) is made audible as a measurement sound.

8. Method according to claim 7, characterized in that on falling below the threshold value (Ig) the measurement sound, which is dependent on the sign and sum of the intensity differential

9

values (ΔI) is disconnected.

9. Method according to one of claims 1-8, characterized in that the measured intensity differential values (ΔI) and the given threshold value (Ig) are standardized ($\overline{\Delta I}$, $\overline{Ig}$).

10. Apparatus for the acoustic control of the adjustment of a light bundle consisting of partial rays, relative to its intensity distribution in an extension of a reference plane, situated in the path of rays, transversely to the optical axis of the light bundle,
characterized by

a) an optoelectronic measurement arrangement (67, 68) for the measurement of the intensity values (I) of partial rays of the light bundle,

b) a differential stage (73), connected to the optoelectronic measurement arrangement (67, 68) to determine intensity differential values (ΔI) from the intensity values (I) of the partial rays,

c) a stage (77) connected to the differential stage (73) to determine the signs of the intensity differential values (ΔI),

d) an oscillation generator (81, 86, 87, 88) connected to the stage (77) and the differential stage (73) to reproduce an oscillation and to modify the oscillation in dependence upon the sum and the sign of the respective intensity differential value (ΔI), and

e) an electroacoustic transducer (92), connected to the oscillation generator (81, 86, 87, 88, 89) to make audible the modified oscillation as a measurement sound.

11. Apparatus according to claim 10, characterized in that the oscillation generator (81, 86, 87, 88, 89) has means (86, 87, 88) controlled by the stage (77) to alter the oscillation in dependence upon the sign of the respective intensity differential value (ΔI).

12. Apparatus according to claim 10 or 11, characterized in that the oscillation generator (81, 86, 87, 88, 89) has means (81, 89) connected with the differential stage (73) to alter the oscillation in dependence upon the sum of the respective intensity differential value (ΔI).

13. Apparatus according to one of claims 10-12, characterized in that

a) a threshold circuit (84), connected to the differential stage (73), is provided to obtain a control signal on falling below a given threshold value (Ig) by the intensity differential values (ΔI), and

b) the oscillation generator (81, 86, 87, 88, 89) has additional means (90, 93, 94) controlled by the control signal, to produce a second oscillation on falling below the threshold value (Ig) and for connecting through the second oscillation to the electroacoustic transducer (92).

14. Apparatus according to one of claims 10-13, characterized in that a standardization stage (74), connected with the differential stage (73), is provided to standardize the established intensity differential values (ΔI).

15. Apparatus according to claim 14, characterized in that connected at the outlet side of standardization stage (74) is a stage (78) for the

10

modification of the intensity differential values (ΔI) according to a predetermined function.

16. Apparatus according to claim 15, characterized in that connected at the outlet side of the stage (78) is a reciprocal value stage (79) for the formation of the reciprocal values of the modified intensity differential values ($1/\Delta I^2$).

## Revendications

1. Procédé pour contrôler acoustiquement le réglage d'un faisceau lumineux, constitué de faisceaux partiels, en ce qui concerne la répartition de son intensité, dans l'étendue d'un plan se trouvant sur le trajet de ce faisceau, transversalement par rapport à l'axe de celui-ci, procédé caractérisé en ce que :

a) on mesure au moins les valeurs d'intensité (I) des faisceaux partiels se situant en bordure de l'ensemble des faisceaux partiels (53) constituant le faisceau lumineux (54) et se trouvant dans l'étendue (X) de la surface de référence (58),

b) on détermine en valeur absolue et en signe les valeurs différentielles d'intensité (ΔI) de respectivement deux faisceaux partiels (53) voisins en direction de l'étendue (X) de la surface de référence (58), et on les totalise,

c) on produit une vibration, dont des paramètres sont modifiés en fonction de la valeur absolue et du signe des valeurs différentielles d'intensité (ΔI) ainsi modifiées, et la vibration ainsi modifiée est rendue audible en tant que tonalité de mesure différenciable en valeur absolue et en signe.

2. Procédé selon la revendication 1, caractérisé en ce qu'on modifie, comme paramètres de la vibration, la fréquence, l'amplitude, la fréquence des impulsions, le taux des impulsions, en fonction de la valeur absolue et du signe des valeurs différentielles d'intensité (ΔI), et qu'ainsi la hauteur de son, l'intensité sonore, la fréquence d'interruption et la durée d'interruption de la tonalité de mesure sont modifiés.

3. Procédé selon la revendication 1 ou 2, caractérisé en ce que :

a) on détermine le signe de la valeur différentielle d'intensité considérée (ΔI),

b) on modifie la fréquence de la vibration ou bien la hauteur de son de la tonalité de mesure en fonction du signe ainsi déterminé.

4. Procédé selon une des revendications 1 à 3, caractérisé en ce qu'on modifie la fréquence d'impulsions de la vibration ou bien la fréquence d'interruption de la tonalité de mesure en fonction des valeurs absolues correspondantes des valeurs différentielles d'intensité (ΔI).

5. Procédé selon une des revendications 1 à 4, caractérisé en ce qu'on modifie, selon une fonction prédéfinie, les valeurs différentielles d'intensité (ΔI) qui ont été déterminées, et on modifie un paramètre de la vibration en fonction des valeurs différentielles d'intensité ($\Delta I^2$) ainsi modifiées.

6. Procédé selon une des revendications 1 à 5, caractérisé en ce qu'on modifie les valeurs différentielles d'intensité (ΔI) qui ont été déterminées, on forme les valeurs inverses de ces valeurs différentielles modifiées, et on modifie un paramètre de la vibration en fonction de ces valeurs inverses ($1/\Delta I^2$) des valeurs différentielles d'intensité modifiées.

7. Procédé selon une des revendications 1 à 6, caractérisé en ce que :

a) on compare les valeurs différentielles d'intensité ($\Delta I$) qui ont été déterminées, ou bien les valeurs différentielles modifiées ($\Delta I^2$), avec une valeur-limite ($I_g$) prédéfinie, qui représente un écart d'intensité permis,

b) on rend audible, en tant que tonalité de mesure, le franchissement vers le bas de cette valeur-limite prédéfinie, par les valeurs différentielles d'intensité ($\Delta I$) ou bien par les valeurs différentielles d'intensité modifiées ($\Delta I^2$).

8. Procédé selon la revendication 7, caractérisé en ce que, lorsque la valeur-limite ($I_g$) est franchie vers le bas, on coupe la tonalité de mesure dépendant du signe et de la valeur absolue des valeurs différentielles d'intensité ($\Delta I$).

9. Procédé selon une des revendications 1 à 8, caractérisé en ce qu'on normalise les valeurs différentielles d'intensité mesurées ($\Delta I$) et la valeur-limite prédéfinie ($I_g$) en obtenant alors ($\bar{\Delta I}, \bar{I}_g$).

10. Installation pour contrôler acoustiquement le réglage d'un faisceau lumineux constitué de faisceaux partiels, en ce qui concerne la répartition de son intensité dans une étendue d'un plan de référence se trouvant sur le trajet de ce faisceau lumineux, transversalement par rapport à l'axe optique de celui-ci, installation caractérisée en ce qu'elle comporte :

a) un dispositif de mesure optique et électronique (67, 68) pour mesurer les valeurs d'intensité (I) de faisceaux partiels constituant le faisceau lumineux,

b) un étage différentiel (73), raccordé au dispositif optique et électronique de mesure, pour déterminer, à partir des valeurs d'intensité (I) des faisceaux partiels, des valeurs différentielles d'intensité ($\Delta I$),

c) un étage (77) relié à l'étage différentiel (73) pour déterminer le signe des valeurs différentielles d'intensité ($\Delta I$),

d) un générateur de vibrations (81, 86, 87, 88), raccordé à l'étage (77) et à l'étage différentiel (73) pour produire une vibration et pour modifier cette vibration en fonction de la valeur absolue et du signe de la valeur différentielle d'intensité ($\Delta I$) considérée,

e) un convertisseur électro-acoustique (92) raccordé au générateur de vibrations (81, 86, 87, 88, 89) pour rendre audible, en tant que tonalité de mesure, la vibration modifiée.

11. Installation selon la revendication 10, caractérisée en ce que le générateur de vibrations (81, 86, 87, 88, 89) comporte des moyens, (86, 87, 88), commandés par l'étage (77), pour modifier la vibration en fonction du signe de la valeur différentielle d'intensité ($\Delta I$) considérée.

12. Installation selon la revendication 10 ou 11, caractérisée en ce que le générateur de vibrations (81, 86, 87, 88, 89) comporte des moyens (81, 89), reliés à l'étage différentiel (73), pour modifier la vibration en fonction de la valeur absolue de la valeur différentielle d'intensité ($\Delta I$) considérée.

13. Installation selon une des revendications 10 à 12, caractérisée en ce que :

a) il est prévu un circuit à seuil (84), raccordé à l'étage différentiel (73), pour obtenir un signal de commande lors du franchissement vers le bas d'une valeur-limite prédéfinie ($I_g$) par les valeurs différentielles d'intensité ($\Delta I$),

b) le générateur de vibrations (81, 86, 87, 88, 89) comporte des moyens supplémentaires (90, 93, 94) commandés par le signal de commande, pour produire une seconde vibration lors du franchissement vers le bas de la valeur-limite ($I_g$) et pour transmettre cette seconde vibration au convertisseur électro-acoustique (92).

14. Installation selon une des revendications 10 à 13, caractérisée en ce qu'il est prévu un étage de normalisation (74) relié à l'étage différentiel (73) pour normaliser les valeurs différentielles d'intensité ($\Delta I$) qui ont été déterminées.

15. Installation selon la revendication 14, caractérisée en ce qu'un étage (78) pour modifier, selon une fonction susceptible d'être prédéfinie, les valeurs différentielles d'intensité ($\Delta I$), est branché à la suite de l'étage de normalisation (74).

16. Installation selon la revendication 15, caractérisée en ce qu'un étage d'inversion de valeur (79) pour former les valeurs inverses ($1/\Delta I^2$) des valeurs différentielles d'intensité modifiées, est branché à la suite de l'étage (78).